# FASCICULE DE BREVET EUROPEEN

(11) **EP 3 331 293 B1**
(45) Date de publication et mention de la délivrance du brevet: **18.09.2019**
(21) Numéro de dépôt: 17205534.5
(22) Date de dépôt: 05.12.2017
(51) Int. Cl.: H04W 64/00

(54) **RESEAU INFORMATIQUE SANS FIL ET PROCEDE POUR LOCALISER UN NOEUD DANS LEDIT RESEAU**
DRAHTLOSES NETZWERK UND VERFAHREN UM EINEN NETZNOTEN ZU LOKALISIEREN
WIRELESS NETWORK AND PROCESS TO LOCALIZE A NODE IN A NETWORK

(30) Priorité: 05.12.2016 FR 1670735
(43) Date de publication de la demande: 06.06.2018
(73) Titulaire: Idosens, 38240 Meylan (FR)
(72) Inventeur: MIERMONT, Sylvain, 38000 GRENOBLE (FR); DEPARIS, Nicolas, 38570 TENCIN (FR)
(74) Mandataire: Roman, Alexis

(56) Documents cités:
- WO-A1-2012/031253
- WO-A1-2017/052780
- US-A1- 2011 207 477
- US-A1- 2013 165 150
- US-A1- 2017 212 206
- Thierry Lestable: "Location-Enabled LoRa(TM) IoT Network: "Geo-LoRa-ting" your assets", , 18 septembre 2015 (2015-09-18), XP055393520, Extrait de l'Internet: URL:https://fr.slideshare.net/titidelparis /io-t-sagemcom-m2minnovationworldgeotrackv 08 [extrait le 2017-07-25]
- BARDYN JEAN-PAUL ET AL: "IoT: The era of LPWAN is starting now", ESSCIRC CONFERENCE 2016: 42ND EUROPEAN SOLID-STATE CIRCUITS CONFERENCE, IEEE, 12 septembre 2016 (2016-09-12), pages 25-30, XP032980801, DOI: 10.1109/ESSCIRC.2016.7598235
- In No "thorsten Kramp;Nicolas Sornin" ET AL: "LoRaWAN Specification", 2015 LoRa(TM) Alliance SPECIAL OR 25 EXEMPLARY, INCIDENTIAL, PUNITIVE OR CONSEQUENTIAL DAMAGES OF ANY KIND, IN CONTRACT OR 26 IN TORT, IN CONNECTION WITH THIS DOCUMENT OR THE INFORMATION CONTAINED HEREIN, EVEN IF, 11 mai 2016 (2016-05-11), XP055326484, Extrait de l'Internet: URL:https://www.lora-alliance.org/portals/ 0/specs/LoRaWAN Specification 1R0.pdf [extrait le 2016-12-06]

## Description

### Domaine technique de l'invention.

L'invention concerne un réseau informatique sans fil et un procédé pour localiser un noeud dans ledit réseau.

La présente invention se rapporte au domaine des réseaux informatiques et de télécommunication sans-fil ainsi qu'au domaine de localisation, notamment par ondes radio, d'objets mobiles.

### État de la technique.

Dans le domaine des réseaux sans-fils pour objets mobiles, certains réseaux sont basés sur le principe d'une topologie maillée. De l' «intelligence », distribuée dans le réseau permet de router les paquets échangés entre objets mobiles en fonction des conditions de trafic, de la défaillance de certains noeuds du réseau, etc, mais peut entraîner des instabilités et rend ces réseaux imprédictibles dans certaines conditions.

D'autres types de réseaux sont plus hiérarchiques, avec une séparation des rôles entres les objets mobiles qui souhaitent se connecter au réseau, et infrastructure du réseau qui doit être reliée par des liens stables, et sur lesquels le gestionnaire du réseau opère un contrôle direct et prédictible. C'est le cas des réseaux informatique dits « Wifi® » et des réseaux de « téléphonie » (aujourd'hui considérée comme un flux de données parmi d'autres) cellulaires.

Dans ces réseaux hiérarchiques, chaque objet mobile est explicitement associé avec un des points d'accès (ou station de base) qui constitue l'infrastructure, chaque point d'accès constituant une « cellule » du réseau. Ceci permet au réseau de déléguer toute la gestion à bas niveau de cet objet mobile à un seul des points d'accès. Afin de permettre la mobilité, les protocoles de ces réseaux prévoient des procédures de transfert intercellulaire. Toutefois, ces procédures nécessitent une participation active des objets mobiles, et donc une consommation d'énergie.

En cas de défaillance d'un point d'accès, tous les objets mobiles qui y étaient connectés perdent la capacité à communiquer jusqu'à ce qu'ils s'associent explicitement avec un point d'accès voisin. Cette exigence de fiabilité conduit généralement au déploiement de points d'accès robustes mais complexes et coûteux, et cela pose un frein à la densification des réseaux. C'est d'autant plus vrai quand des fréquences différentes doivent être utilisées entre cellules voisines afin de limiter les interférences entre points d'accès, et que la gestion optimum des fréquences devient un problème très complexe en cas de réseau dense.

Dans certains types de réseaux, la localisation par l'infrastructure des objets mobiles permet d'offrir des services à haute valeur ajoutée. Quand la localisation précise de chaque point d'accès est connue, des techniques de mesures de temps de vol lors de l'échange de paquets, de mesure de puissance reçue du signal radio et d'angle d'arrivée du signal, permettent de localiser un objet mobile à partir des mesures d'au moins deux points d'accès.

Plus de mesures, données par plus de points d'accès, permettent d'accroître la précision de la localisation. Toutefois, étant donnée les freins à la densification exposés plus haut, la précision reste en générale limitée.

Le document brevet US2011/207477 (SIOMINA IANA) décrit une méthode pour déterminer la position d'un noeud en mesurant la distance radio entre des éléments du réseau sans fil et un noeud « cible ». Le document brevet US 2013/165150 (CHO CHAE HWAN) décrit un procédé pour mesurer une position au moyen d'un point d'accès de positionnement. Le document WO2012/031253 (QULCOMM) divulgue un réseau informatique sans fil selon le préambule de la revendication 12. Le document US2017/212206, qui ne fait partie de l'art antérieur que pour les revendications 12 et 13, divulgue une méthode pour déterminer la position d'un noeud sur la base d'informations de positionnements fournies par des ancres en réponse à une requête envoyée par ledit noeud.

La publication : Thierry Lestable : «Location-enable(TM) IoT Network : « geo-LoRa-ting » your assets », 18 septembre 2015, divulgue un réseau informatique sans fil selon le préambule de la revendication 1, ainsi qu'un procédé de calcul de la position d'un noeud « cible » sur la base de mesures de distance effectuées par des points d'accès. Dans ces réseaux de l'art antérieur, la précision de calcul de la position du noeud « cible » n'est toutefois pas optimale et la mesure de distance engendre une consommation énergétique importante au niveau dudit noeud.

L'invention vise à remédier aux problèmes techniques précités. En particulier, un objectif de l'invention est d'améliorer la précision de calcul de la position d'un noeud « cible ». Un autre objectif de l'invention est de pouvoir densifier à moindre coûts des points qui mesurent leurs distances au noeud « cible », et ce tout en préservant la batterie dudit noeud.

### Divulgation de l'invention.

La solution proposée par l'invention est un réseau informatique sans fil comportant un serveur et au moins un noeud adapté pour communiquer avec ledit serveur, les échanges de données entre ledit noeud et ledit serveur passant par au moins un point d'accès, lequel noeud et lequel point d'accès sont équipés d'émetteurs-récepteurs radio, ledit noeud étant adapté pour communiquer avec ledit point d'accès, le réseau comprend en outre au moins trois ancres adaptées pour communiquer avec le serveur, les échanges de données entre lesdites ancres et ledit serveur passant par au moins un point d'accès, le serveur étant adapté pour envoyer une commande au noeud. Ce réseau est remarquable en ce que :
- le serveur st adapté pour envoyer successivement à au moins trois ancres sélectionnées dont les positions sont connues, une commande,
- le noeud est adapté pour, suite à la commande transmise par le serveur, se placer, pour un temps déterminé, dans un mode lui permettant d'émettre une réponse à un message d'interrogation émis par une ancre pour une mesure radio de distance,
- chaque ancre est adaptée pour, suite à la commande transmise par le serveur, envoyer un message d'interrogation au noeud et effectuer la mesure radio de distance entre ladite ancre et ledit noeud sur la base de ladite réponse, et transmettre cette mesure audit serveur.

Les ancres permettent d'améliorer la précision de calcul de la position du noeud tout en densifiant à moindre coûts les points de mesure. En outre, le noeud est placé, sur commande du serveur, dans un mode où il ne répond aux interrogations des ancres que durant une fenêtre de temps limitée. Le noeud peut ainsi rester en veille le reste du temps et, de fait, préserver sa batterie.

Le réseau local sans-fil de l'invention est bâtie suivant une topologie « en arbre » avec une séparation fonctionnelle claire entre :
- les noeuds (objets mobiles), notés N sur les illustrations ;
- la partie de l'infrastructure qui sert à l'échange de données constituée de un ou plusieurs points d'accès, notés PA, et d'un unique serveur réseau, noté S;
- la sous-partie de l'infrastructure dédiée à la localisation constituée d'ancres, notées A.

La gestion du réseau, y compris la gestion bas niveau (couche « 2/liaison de données » et couche supérieures du modèle OSI) est assurée par le serveur de réseau. Les points d'accès assurent l'interface radio (couche « 1/physique » du modèle OSI) entre les noeuds et le serveur, assurent certains aspects temporels du protocole et informent le serveur de certains caractéristiques des trames radios reçues.

Dans un réseau selon l'invention, le protocole de liaison de donnée est de type asynchrone ALOHA, à faible énergie et longue portée, où les communications sont toujours initiées par un noeud en direction du serveur réseau, avec à chaque fois une courte fenêtre temporelle pendant laquelle le serveur réseau peut répondre au noeud qui vient d'émettre.

Du point de vue des noeuds, l'association se fait donc uniquement avec le serveur réseau. Pour le protocole d'échange de données, les points d'accès sont « transparents ». Par « *transparence* », on entend au sens de l'invention le fait que le noeud et les ancres (qui ne sont pour le réseau que des noeuds avec des fonctions spéciales) communiquent avec le serveur sans avoir besoin de sélectionner explicitement un point d'accès qui recevra la trame émise par ledit noeud. C'est une caractéristique de la communication entre le noeud et les ancres d'une part et le serveur d'autre part, qui est indépendante de la communication entre un noeud et une ancre (format de trame différent). En d'autres termes, à partir du moment où un noeud est à portée d'au moins un point d'accès, la communication entre ce noeud est le serveur est assurée. Pour que cela fonctionne, le protocole de liaison de données du réseau de l'invention est conçu pour supporter une latence entre les points d'accès et le serveur de réseau qui peut atteindre la centaine de millisecondes.

Ainsi, la mobilité des noeuds est supportée sans nécessiter qu'ils se réassocient à chaque changement de point d'accès, et donc en limitant la consommation énergétique des noeuds qui peuvent rester en veille. De plus, si un noeud est à portée de plusieurs points d'accès, la redondance des chemins entre ce noeud et le serveur de réseau accroît la robustesse de la liaison.

Par rapport aux réseaux existants, un réseau selon l'invention permet d'utiliser des points d'accès fonctionnellement plus simples et avec des moindres contraintes de fiabilité, ce qui tend à diminuer leur coût, et de favoriser la densification, voir la sur-densification afin d'assurer une couverture redondantes de chaque noeud par une multitude de points d'accès.

Pour la localisation, un réseau selon l'invention utilise des éléments d'infrastructure séparés du ou des points d'accès : les ancres. Ces ancres sont fonctionnellement plus simples que les points d'accès décrits plus hauts et elles utilisent le même réseau de donnée à faible énergie que les noeuds.

La fonction des ancres est, sur commande du serveur réseau, de faire une mesure radio de distance entre elles-mêmes et un noeud en particulier du réseau. Leur position exacte étant connues, le croisement des mesures de plusieurs ancres permet de calculer la position d'un noeud en particulier.

Préalablement à la prise de mesure faites par les ancres, le serveur aura activé temporairement le mode « localisation » du noeud dans lequel celui-ci écoute le canal radio et répond aux demandes d'interrogation des ancres.

La mesure radio de distance dans le réseau sans fil de l'invention peut reposer sur une mesure active du temps de vol, avec l'ancre fonctionnant comme interrogateur (envoi d'un « ping ») et le noeud fonctionnant comme un réflecteur actif de signal (également appelé « réflecteur radar actif»), répondant au signal « ping » reçu par un signal « pong », avec un temps de réponse aussi constant que possible. L'ancre mesure très précisément le temps écoulé entre l'émission du « ping » et la réception du « pong » et soustrait à ce temps le temps de réponse d'un noeud (constante connue du système). Le temps restant correspond au temps de propagation allé et retour du signal radio. Considérant qu'une onde radio se propage à une vitesse très proche de celle de la lumière il est possible de déduire la distance entre l'ancre ayant envoyé le « ping » et le noeud ayant répondu.

Afin d'améliorer les mesures de position dans des bâtiments à plusieurs niveaux, en présence de passerelles ou rayonnages dans un bâtiment de type entrepôt, chaque ancre et noeud selon l'invention peuvent être équipés d'un baromètre. L'altitude des ancres étant connue, il sera possible de déduire la position verticale d'un noeud en comparant la pression atmosphérique mesurée au niveau du noeud et les pressions atmosphériques mesurées par les ancres proches.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode préféré de réalisation, à réception de la commande transmise par le serveur, chaque ancre est adaptée pour envoyer un message d'interrogation au noeud puis chronométrer le temps que met la réponse dudit noeud pour arriver, ladite ancre calculant localement la distance entre elle-même et ledit noeud, puis transmet ces informations vers le serveur.
- Selon un mode préféré de réalisation, à réception de la commande transmise par le serveur, le noeud est adapté pour envoyer une trame de validation audit serveur. Cette trame de validation peut contenir une mesure de la pression atmosphérique au niveau du noeud.

- Selon un mode de réalisation, le serveur est adapté pour déterminer une localisation approximative du noeud à partir d'une liste de points d'accès ayant reçu la trame de validation et de la connaissance de la position de chaque point d'accès, ledit serveur étant adapté pour sélectionner les ancres qui sont les plus proches dudit noeud.
- Le réseau peut présenter plusieurs noeuds et au moins deux points d'accès, lequel réseau comportant en outre au moins une des caractéristiques suivantes : - les points d'accès sont reliés au serveur par des liens informatiques TCP/IP dont les latences sont inférieures à 300 millisecondes ; - les noeuds, les ancres et les points d'accès sont équipés d'émetteurs-récepteurs radio fonctionnant avec la même modulation et dans la même bande de fréquence ; - les zones de couvertures radio des points d'accès se recouvrent au moins partiellement ; - les points d'accès agissent au niveau de la couche 1 du réseau et sont transparents pour la couche 2 dudit réseau, de telle façon que la communication entre les noeuds et le serveur ainsi que la communication entre les ancre et le serveur, se fassent de façon transparente, sans la nécessiter d'adresser, ou de s'associer explicitement avec un ou plusieurs points d'accès ; - des données sont échangées dans les deux sens entre les noeuds et le serveur ; - les noeuds communiquent avec les points d'accès grâce à un protocole de niveau 2, asynchrone, où tous les échanges sont initiés par un noeud et où le serveur dispose d'un délai supérieur au double de la latence typique entre serveur et points d'accès pour transmettre une réponse à un noeud par l'intermédiaire d'un point d'accès ; - le serveur est adapté pour d'identifier des trames reçues simultanément par plusieurs points d'accès, et pour sélectionner, parmi ceux ayant reçu une trame émise par un noeud, un unique point d'accès par lequel envoyer une trame de réponse ; - le serveur est adapté envoyer une trame contenant des commandes à chaque ancre à n'importe quel moment, par l'intermédiaire d'un point d'accès connu a priori ; - le serveur est adapté pour utiliser de multiples mesures de distance avec un noeud cible, effectuées par plus de trois d'ancres dont les positions sont connues, pour calculer la position dudit noeud cible.

- Selon un mode de réalisation, le réseau comporte au moins une des caractéristiques suivantes : - la communication entre les ancres, le noeud et des points d'accès, utilise une modulation numérique à étalement de spectre LoRa® ; - la communication entre les ancres, le noeud et des points d'accès utilise une bande de fréquence « Industrielle, Scientifique et Médicale » de 2,4 GHz à 2,4835 GHz ; - la mesure de la distance entre le noeud et les ancres se fait grâce à une mesure radio de temps de vol d'une résolution inférieure à 10 nanosecondes, avec les ancres dans un rôle d'interrogateur/récepteur, le noeud agissant comme réflecteur actif radio.
- Selon un mode de réalisation, les ancres situées à portée radio d'une ancre interrogatrice transmettant un signal de mesure de distance, et à portée radio d'un noeud cible se comportant comme réflecteur actif radio, sont adaptées pour effectuer une mesure complémentaire avec une résolution inférieure à 10 nanoseconde, vu de leur position, du temps entre le signal émis par l'ancre interrogatrice et la réponse dudit noeud cible, ce temps correspondant à la pseudo-distance entre ledit noeud cible, l'ancre interrogatrice et l'ancre effectuant la mesure complémentaire.
- Selon un mode de réalisation, la mesure radio de distance entre le noeud et une ancre se fait par une mesure radio de temps de vol de la réponse émise par ledit noeud au message d'interrogation de ladite ancre et/ou par une mesure de la puissance radio de la réponse émise par ledit noeud au message d'interrogation de ladite ancre.

Un autre aspect de l'invention concerne un procédé pour localiser un noeud dans un réseau informatique sans fil conforme à la revendication 11.

Encore un autre aspect de l'invention concerne une variante de réalisation où le réseau informatique sans fil est conforme à la revendication 12 .

Selon cette variante de réalisation, un aspect supplémentaire de l'invention concerne un procédé pour localiser un noeud dans un réseau informatique sans fil conforme à la revendication 13.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- La figure 1 représente une vu fonctionnelle des différents éléments constituant le réseau local sans fil de l'invention.
- La figure 2 représente le déroulement temporel d'un échange de donnée entre un noeud et le serveur du réseau.
- La figure 3 représente un cas simplifié de mobilité de noeud et illustre la capacité du réseau de l'invention à l'itinérance transparente.
- La figure 4 représente le déroulement temporel de la mesure de position d'un noeud par le réseau.
- La figure 5 représente le principe de multilatération par mesure de temps de vol qui sert à déterminer la position d'un noeud.

### Modes préférés de réalisation de l'invention.

Dans le mode de réalisation à suivre, seul un nombre minimal de chacun des éléments constituant l'invention sont représentés : un seul noeud, au moins un et préférentiellement au moins deux points d'accès, au moins trois ancres et un serveur. Dans un système typiquement déployé, le nombre de noeuds serait significativement supérieur (d'une dizaine à plusieurs dizaines de milliers), avec jusqu'à une centaine de points d'accès, et une dizaine à un millier d'ancres.

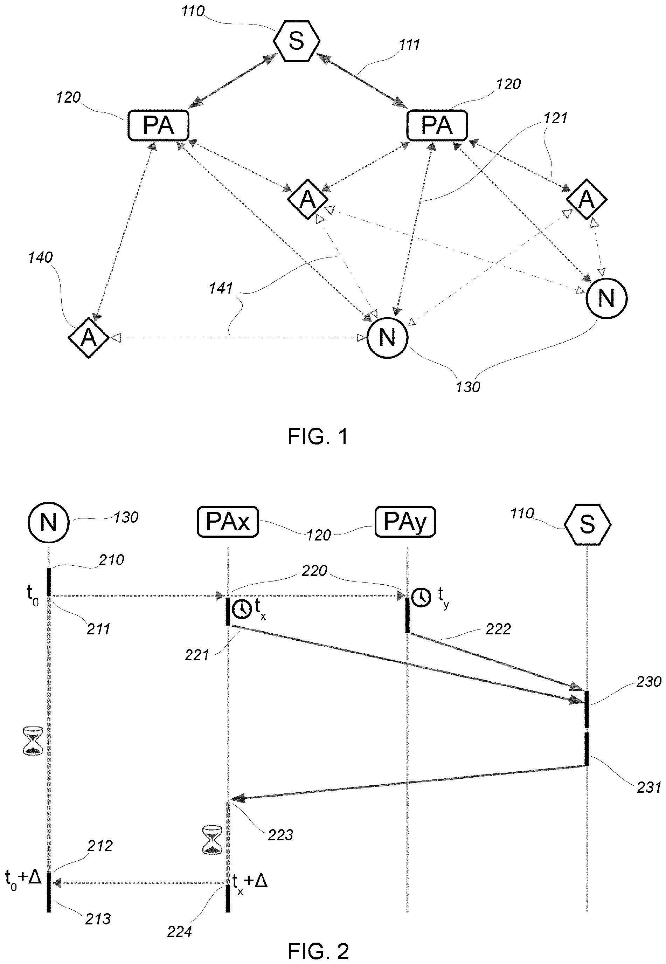

La figure 1 représente tous les éléments d'un réseau radio sans fil conforme à l'invention et le type de communication qu'ils peuvent s'échanger.

Le serveur (110) constitue le coeur du réseau, c'est un ordinateur générique exécutant un logiciel ou un ensemble de logiciels spécifiques au réseau sans fil de l'invention. Il est relié à une multitude de points d'accès (120) par des liaisons de donnée Internet/intranet (111) qui sont typiquement des liens filaires (type Ethernet, ADSL, etc), sans fil (type Wifi, cellulaire GPRS ou LTE) ou une combinaison des deux, utilisant des protocoles TCP/IP. La latence typique d'un lien est inférieure à 100 millisecondes. Les points d'accès échangent des données avec le serveur en utilisant des protocoles applicatif type HTTP ou MQTT. En fonction de la topologie du lieu dans lequel le réseau est installé, notamment lorsque ce lieu n'est pas très étendu, le serveur (110) peut n'être relié qu'à un seul point d'accès (120).

Les points d'accès (120) sont constitués chacun d'un micro-ordinateur embarqué sur lequel s'exécute un système d'exploitation fiable et économe en ressource (typiquement construit autour d'un noyau Linux) et d'une carte électronique incluant une multitude d'émetteurs-récepteurs radio compatibles avec la couche physique préférée de l'invention : une modulation LoRa® dans la bande de fréquence de 2,4 GHz. En cas de besoin, l'homme du métier pourra se référer au texte de référence pour la modulation LoRa® est la note d'application AN1200.22 de Semtech accessible depuis le lien : http://www.semtech.com/images/datasheet/an1200.22.pdf.

Ces points d'accès utilisent cette interface radio LoRa 2,4 GHz pour établir des liens radio (121) avec les noeuds (130) et les ancres (140) qui appartiennent au réseau contrôlé par le serveur (110). Ces liens servent à échanger des données de façon bidirectionnelle. En fonction de la topologie du lieu dans lequel le réseau est installé, différents noeuds (130) et ancres (140) seront à portée radio d'un ou plusieurs points d'accès (120). Les points d'accès et les ancres sont fixes, mais l'environnement radio n'étant pas statique, la « visibilité » de chaque ancre par chaque point d'accès peut évoluer. Les noeuds sont considérés comme mobiles et la « visibilité » de chaque noeud par chaque point d'accès peut évoluer significativement.

Les noeuds (130) sont préférentiellement des systèmes électroniques basés sur un microcontrôleur à très faible consommation type ARM® Cortex M4, un émetteur-récepteur radio compatible avec la modulation LoRa à 2,4 GHz, une alimentation sur piles alcalines AA, et un ensemble de capteurs et/ou d'actionneurs dépendant de l'application finale du noeud.

L'autonomie énergétique de ces noeuds est importante car un rechargement régulier de milliers de noeuds rendrait le système non viable, et car ces noeuds peuvent être installés dans des endroits où l'accès est difficile ou dangereux. Les noeuds (130) communiquent par radio avec les points d'accès (120) mais du point de vue du protocole « liaison de données », l'association et les échange de données se font avec le serveur (110).

La communication entre les ancres (140), les noeuds (130) et les points d'accès (120) utilise préférentiellement une bande de fréquence « Industrielle, Scientifique et Médicale » de 2,4 GHz à 2,4835 GHz.

Sur commande du serveur (110), chaque noeud (130) peut être placé temporairement dans un mode « réflecteur actif » ou « localisation » durant lequel il répondra aux requêtes provenant des ancres (140) d'une façon temporellement déterministe afin de pouvoir faire des mesures radio de distance, préférentiellement par mesure du temps de vol des ondes radio de la réponse émise par un noeud (130) au message d'interrogation de l'ancre. Cette mesure radio de distance peut également être réalisée par une mesure de la puissance radio de la réponse émise par un noeud (130) au message d'interrogation de l'ancre. La mesure radio de distance peut encore être réalisée par une mesure du temps de vol des ondes radio et par une mesure de la puissance radio. En définitive, la mesure radio de distance est réalisée par une mesure du temps de vol des ondes radio et/ou par une mesure de la puissance radio.

Les ancres (140) sont des systèmes électroniques typiquement très similaires aux noeuds mais alimentés sur secteur ou par exemple grâce à un panneau solaire, car leur radio est beaucoup plus souvent en écoute afin de pouvoir recevoir des commandes du serveur (110) avec une latence minimale.

Sur commande du serveur (110), une ancre (140) peut communiquer avec un noeud cible situé à portée radio selon un protocole bas niveau de mesure radio de distance (141). Typiquement, aucune donnée n'est échangée entre les noeuds et les ancres. Ces mesures de distance servent au serveur (110) à calculer la position du noeud cible.

La figure 2 représente le déroulement dans le temps d'un échange de donnée entre un noeud (130) et le serveur (110), et permet d'illustrer le rôle des points d'accès (120) dans la fonction d'itinérance transparente caractéristique du réseau sans fil de l'invention.

Quand il a une donnée à transmettre, le noeud (130) émet une trame radio (210) sur une fréquence radio prédéterminée avec des paramètres (type de modulation, vitesse de transmission, format de trame) fixés par le protocole commun au système. Après émission de la trame, le noeud se met en veille (211) au temps t0 pour une période Δ typiquement égale à 2 secondes.

Quand les points d'accès (120) PAX et PAY, situés à portée radio du noeud, reçoivent la trame émise, ils enregistrent chacun avec leur horloge locale à quel moment tX et tY (220) le dernier échantillon de la trame a été reçu. Avantageusement, cette horloge est monotone, fonctionne à 1 MHz, avec une taille de 32 bits. Les horloges entre les points d'accès ne sont pas alignées et elles se remettent à zéro toutes les 4294 secondes environ.

Après analyse éventuelle de la trame reçue, puis compression et sérialisation, les deux points d'accès transmettent chacun (221, 222) par la liaison Internet/intranet la trame reçue au serveur, accompagnée de métadonnées : identifiant du point d'accès, fréquence radio sur laquelle la trame a été reçue, paramètres de la modulation, niveau de puissance en dBm du signal radio reçu (RSSI). Le délai d'analyse et de transmission est variable, et le serveur est susceptible de recevoir des copies de la même trame reçue par de multiples points d'accès durant une fenêtre temporelle (230) qui peut s'étaler sur plusieurs centaines de millisecondes.

Après avoir éliminé les duplicata de la trame reçue, si le serveur n'a pas de donnée à transmettre au noeud, il dé-sérialise puis traite les données reçues, et l'échange s'arrête là.

Si le serveur a des données à transmettre au noeud, ou si les données transmises par le noeud nécessitent une réponse, le serveur compose une réponse (231) puis sélectionne un point d'accès parmi ceux ayant reçu la trame émise par le noeud afin de transmettre la réponse. Typiquement, le serveur sélectionne le point d'accès ayant reçu la trame avec le plus haut niveau d'énergie car c'est celui qui a la plus haute probabilité d'arriver à transmettre la réponse de façon fiable. Sur la figure 2, c'est le point d'accès PAX qui est sélectionné par le serveur pour transmettre la réponse.

Le serveur transmet alors la trame à émettre par la liaison Internet/intranet en indiquant explicitement dans les métadonnées accompagnant le message du serveur vers le point d'accès que la trame de réponse doit être émise au temps tX + Δ.

Le point d'accès sélectionné reçoit (223) la demande de réponse du serveur typiquement plusieurs centaines de millisecondes avant d'avoir à la transmettre, il dispose donc d'un temps suffisant pour analyser la demande du serveur, et pour se préparer à émettre la réponse, même si les liaisons Internet/intranet avec le serveur sont affectées d'une latente importante (par rapport à ce qui se rencontre habituellement dans ce genre de réseaux) ou que cette latence subit des fluctuations importantes.

Au temps tX + Δ le point d'accès PAX commence à transmettre (224) la réponse du serveur. Au même moment, le noeud sort de veille (212) et configure sa radio en réception à temps pour recevoir avec succès (213) la réponse du serveur à la trame initialement transmise par le noeud.

Ce principe de transmission ne permet pas des échanges très rapides mais maximise la durée de vie de la batterie du noeud qui n'a aucune synchronisation absolue à maintenir et doit juste être capable de rester en veille durant des périodes courtes (typiquement 2 secondes) avec une précision satisfaisante (meilleure que 10 ms). Les temps de veille du noeud entre plusieurs transmissions successives peuvent être longs (plusieurs minutes à plusieurs heures) et peuvent être relativement imprécis si l'application finale du noeud le tolère.

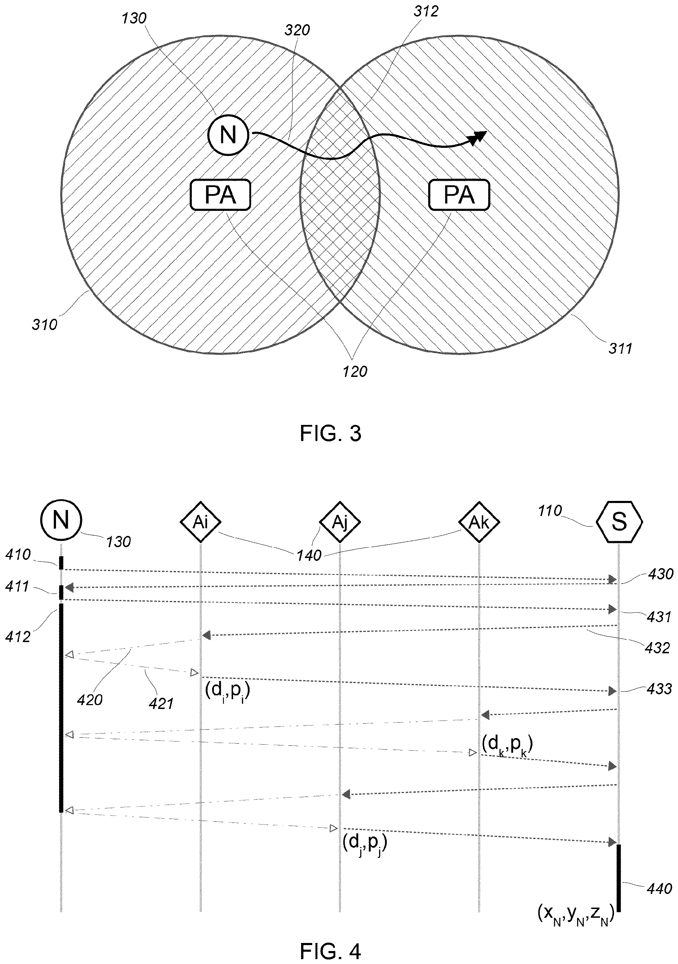

Un autre avantage de ce protocole d'échange de données est illustré à la figure 3 : permettre l'itinérance sans intervention du noeud. Deux points d'accès (120) ont deux zones de couverture radio (310, 311) partiellement recouvrantes (312). Si un noeud (130) émet au moment où il est dans une zone (310 ou 311) couverte par un seul point d'accès, la trame montante émise sera reçue par cet unique point d'accès et la réponse éventuelle du serveur parviendra par ce point d'accès. Si le noeud se déplace suivant une trajectoire quelconque (320) et se trouve dans la zone (312) couverte par deux points d'accès au moment d'émettre une autre trame à destination du serveur, le serveur reçoit la trame émise en deux exemplaires (redondance accroissant la fiabilité de la transmission) et peut choisir de faire émettre une éventuelle réponse par un point d'accès ou l'autre.

Tant que la vitesse de déplacement reste modeste de façon à ce que le noeud ne soit pas trop éloigné du lieu où la trame « montante » au moment où l'éventuelle réponse « descendante » du serveur arrive, le système fonctionne. A aucun moment il n'est requis pour le noeud de dialoguer directement avec les points d'accès pour négocier une transition de l'un à l'autre, ni n'est-il nécessaire pour le noeud de passer un temps significatif à écouter la bande radio pour recevoir des trames « balise » émises par des points d'accès afin de savoir s'il rentre ou sort d'une zone de couverture. Ces caractéristiques participent à la maximisation de la durée de vie des batteries en cas de mobilité d'un noeud.

En complément avec sa capacité à gérer la mobilité, le réseau de transmission sans fil de l'invention permet à la demande de localiser précisément chaque noeud en ayant recours aux ancres.

La figure 4 représente le déroulement temporel de la localisation d'un noeud (130) par le serveur (110). Afin de maintenir la lisibilité de la figure, le rôle des points d'accès n'est pas représenté. Il est sous-entendu que tous les échanges de données entre un noeud et le serveur passent par au moins un point d'accès, et de même pour les échanges entre une ancre et le serveur.

Lorsqu'un noeud (130) transmet (410) des données au serveur (110) ou qu'il transmet à intervalle régulier une trame ne contenant pas de données afin de signaler sa présence, le serveur peut décider à réception de la trame émise par le noeud qu'il souhaite connaître la localisation précise de ce noeud. Il envoie alors au noeud une trame réponse contenant une commande (430) qui mettra le noeud dans un mode « localisation » durant une durée limitée, typiquement moins de 5 secondes afin de limiter la consommation énergétique.

A réception de cette commande, le noeud commence par envoyer (411) une trame de validation au serveur, puis entre en mode « localisation » durant lequel le noeud ne sera plus qu'à l'écoute de trames d'interrogation (ou « pings ») en provenance des ancres. La trame de validation envoyée par le noeud au serveur contient typiquement une mesure de la pression atmosphérique au niveau du noeud mesurée par un baromètre numérique avec une résolution verticale typique de 15 à 30 cm.

Après avoir reçu confirmation (431) de l'activation du mode « localisation » sur le noeud, le serveur détermine la localisation approximative du noeud à partir de la liste des points d'accès ayant reçu les trames émises par le noeud (430, 431) et de la connaissance de la position de chaque point d'accès du système. Cette localisation approximative est par exemple déterminée par une analyse de la puissance du signal contenant la trame de validation envoyée par le noeud au serveur. A partir de cette connaissance, le serveur sélectionne préférentiellement un nombre limité d'ancres (140) qui ont une forte probabilité d'être proches du noeud (ancres Ai, Aj et Ak sur la figure). Dans le cas où le nombre d'ancres (140) est déjà limité, par exemple au nombre de trois, le serveur les sélectionne toutes.

Ensuite, le serveur envoie successivement à chaque ancre sélectionnée une commande (432) déclenchant une ou plusieurs mesures successives de distance avec le noeud. Les ancres (140) écoutent en permanence les trames en provenance du serveur émises par les points d'accès, il n'est donc pas nécessaire d'attendre que chaque ancre envoie une trame à destination du serveur pour pouvoir lui envoyer une commande en réponse. Le point d'accès à utiliser pour transmettre une trame à destination de chaque ancre est connu par le serveur grâce à des trames transmises par les ancres à l'installation du système. Tant que les ancres et les points d'accès ne sont pas déplacés, et que l'environnement affectant la propagation radio n'est pas modifié substantiellement, cette connaissance reste valide.

A réception de la commande, l'ancre Ai envoi un message d'interrogation (ou « ping », 420) au noeud puis chronomètre avec une précision meilleure que la nanoseconde le temps que met la réponse (ou « pong », 421) du noeud pour arriver. L'ancre calcule localement la distance di entre elle-même et le noeud, mesure la pression atmosphérique pi, puis transmet ces informations vers le serveur (433). Les ancres Aj et Ak procèdent de façon similaire.

Après réception des informations d'au moins 3 ancres, le serveur peut procéder à un calcul itératif (440) destiné à déterminer la position [xn, yn, zn] du noeud dans l'espace qui a la plus forte probabilité de retourner les données observées [di, pi], [dj, pj], [dk, pk], connaissant pn la pression retournée par le noeud, et les coordonnées [x,y,z] de chaque ancre dans un repère géométrique local arbitraire.

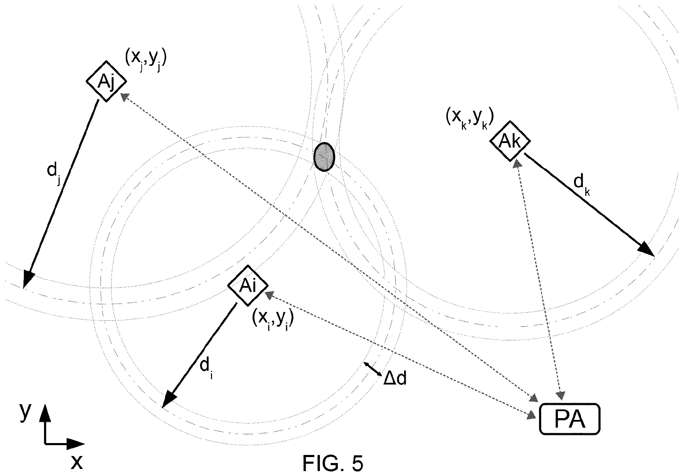

La figure 5 représente une vue simplifiée (car en deux dimensions au lieu de trois) du problème mathématique à résoudre par le serveur. Les mesures de distances di, dj ou dk sont affectées d'une incertitude de mesure Δd, et par un biais due au fait que le plus court chemin pour les ondes radio peut être plus long (mais jamais plus court) qu'une ligne droite dans l'espace. C'est un problème probabiliste qui peut être résolu par une méthode de recherche itérative telle que les moindres carrés.

L'utilisation de plus de 3 ancres, permet d'éliminer plus facilement les mesures aberrantes et d'accroître la précision de la solution mathématique. Dans un environnement favorable, sans obstacle entre les ancres et le noeud, la précision de la mesure de position est typiquement de l'ordre du mètre dans les trois dimensions. Dans un environnement perturbé, avec des obstacles absorbants et des surfaces réfléchissant les ondes radios, la précision peut se dégrader à un niveau décamétrique.

Dans une implémentation amélioré du système de l'invention, les ancres qui n'émettent pas le signal d'interrogation (par exemple les ancres Aj et Ak au moment où Ai fait une mesure de distance) peuvent, en écoutant simplement le canal radio dans lequel se fait la mesure de distance, chronométrer le délai, vu de leur position, entre le « ping » d'interrogation et le « pong » du noeud cible. Cette mesure donne une information de pseudo-distance, dépendant de la position de l'ancre interrogatrice, de l'ancre effectuant cette mesure complémentaire, et de la position du noeud cible. En combinant N mesures de distance, et M mesures de pseudo-distance (avec M typiquement 2 à 5 fois plus grand que N), le serveur est capable d'accroître la précision de la localisation du noeud cible, ou pour un objectif de précision donné, diminuer le nombre de mesures actives de distance (donc la consommation du noeud).

Selon une variante de réalisation, ce sont les noeuds (130) qui réalisent les mesures de distance avec les ancres (140). Pour ce faire, et de façon symétrique au mode de réalisation décrit précédemment, chaque ancre (140) est adaptée pour, suite à une commande transmise par le serveur (110), se placer, pour un temps déterminé, dans un mode « localisation » lui permettant d'émettre une réponse à un message d'interrogation émis par le noeud (130) pour une mesure radio de distance. Et suite à une commande (430) transmise par le serveur (S, 110) au noeud (N, 130), ce dernier effectue la mesure radio de distance entre ledit noeud et chaque ancre placée en mode « localisation ». Cette mesure est ensuite transmise au serveur.

Les modes de réalisations décrits dans les paragraphes précédents illustrent une façon parmi d'autres d'implémenter l'invention. Diverses modifications fonctionnellement équivalentes peuvent être apportées au mode de réalisation tel que décrit précédemment sans sorti du champ d'application de l'invention tel que définit par les revendications à suivre.

## Revendications

1. Réseau informatique sans fil comportant un serveur (S, 110) et au moins un noeud (N, 130) adapté pour communiquer avec ledit serveur, les échanges de données entre ledit noeud et ledit serveur passant par au moins un point d'accès (PA, 120), lequel noeud et lequel point d'accès sont équipés d'émetteurs-récepteurs radio, ledit noeud étant adapté pour communiquer avec ledit point d'accès, le réseau comprend en outre au moins trois ancres (A, 140) adaptées pour communiquer avec le serveur (S, 110), les échanges de données entre lesdites ancres et ledit serveur passant par au moins un point d'accès (PA, 120), le serveur (S, 110) est adapté pour envoyer une commande (430) au noeud (N, 130),
**caractérisé en ce que** :
- le serveur (S, 110) est adapté pour envoyer successivement à au moins trois ancres sélectionnées dont les positions sont connues, une commande (432),
- le noeud (N, 130) est adapté pour, suite à la commande (430) transmise par le serveur (S, 110), se placer, pour un temps déterminé, dans un mode lui permettant d'émettre une réponse à un message d'interrogation émis par une ancre (A, 140) pour une mesure radio de distance,
- chaque ancre (A, 140) est adaptée pour, suite à la commande (432) transmise par le serveur (S, 110), envoyer un message d'interrogation (420) au noeud (N, 130) et effectuer la mesure radio de distance entre ladite ancre et ledit noeud (N, 130) sur la base de ladite réponse, et transmettre cette mesure audit serveur.

2. Réseau selon la revendication 1, dans lequel, à réception de la commande transmise par le serveur (S, 110), chaque ancre (A, 140) est adaptée pour envoyer un message d'interrogation (420) au noeud (N, 130) puis chronométrer le temps que met la réponse (421) dudit noeud pour arriver, ladite ancre calculant localement la distance (dᵢ) entre elle-même et ledit noeud, puis transmet ces informations vers le serveur (S, 110).

3. Réseau selon l'une des revendications précédentes, dans lequel, à réception de la commande transmise par le serveur (S, 110), le noeud (N, 130) est adapté pour envoyer une trame de validation (411) audit serveur.

4. Réseau selon la revendication 3, dans lequel la trame de validation (411) contient une mesure de la pression atmosphérique au niveau du noeud (N, 130).

5. Réseau selon l'une des revendications 3 ou 4, dans lequel le serveur (S, 110) est adapté pour déterminer une localisation approximative du noeud (N, 130) à partir d'une liste de points d'accès (PA, 120) ayant reçu la trame de validation (411) et de la connaissance de la position de chaque point d'accès, ledit serveur étant adapté pour sélectionner les ancres (A, 140) qui sont les plus proches dudit noeud.

6. Réseau selon l'une des revendications précédentes, comportant plusieurs noeuds (N, 130) et au moins deux points d'accès (PA, 120), lequel réseau comportant en outre au moins une des caractéristiques suivantes :
- les points d'accès (PA, 120) sont reliés au serveur (S, 110) par des liens informatiques TCP/IP dont les latences sont inférieures à 300 millisecondes,
- les noeuds (N, 130), les ancres (A, 140) et les points d'accès (PA, 120) sont équipés d'émetteurs-récepteurs radio fonctionnant avec la même modulation et dans la même bande de fréquence,
- les zones de couvertures radio des points d'accès (PA, 120) se recouvrent au moins partiellement,
- les points d'accès (PA, 120) agissent au niveau de la couche 1 du réseau et sont transparents pour la couche 2 dudit réseau, de telle façon que la communication entre les noeuds (N, 130) et le serveur (S, 110) ainsi que la communication entre les ancre (A, 140) et le serveur (S, 110), se fassent de façon transparente, sans la nécessiter d'adresser, ou de s'associer explicitement avec un ou plusieurs points d'accès (PA, 120),
- des données sont échangées dans les deux sens entre les noeuds (N, 130) et le serveur (S, 110),
- les noeuds (N, 130) communiquent avec les points d'accès (PA, 120) grâce à un protocole de niveau 2, asynchrone, où tous les échanges sont initiés par un noeud et où le serveur (S, 110) dispose d'un délai supérieur au double de la latence typique entre serveur et points d'accès pour transmettre une réponse à un noeud (N, 130) par l'intermédiaire d'un point d'accès (PA, 120),
- le serveur (S, 110) est adapté pour d'identifier des trames reçues simultanément par plusieurs points d'accès (PA, 120), et pour sélectionner, parmi ceux ayant reçu une trame émise par un noeud (N, 130), un unique point d'accès par lequel envoyer une trame de réponse,
- le serveur (S, 110) est adapté envoyer une trame contenant des commandes à chaque ancre (A, 140) à n'importe quel moment, par l'intermédiaire d'un point d'accès (PA, 120) connu a priori,
- le serveur (S, 110) est adapté pour utiliser de multiples mesures de distance avec un noeud cible (N, 130), effectuées par plus de trois d'ancres (A, 140) dont les positions sont connues, pour calculer la position dudit noeud cible.

7. Réseau selon l'une des revendications précédentes, comportant au moins une des caractéristiques suivantes :
- la communication entre les ancres (A, 140), le noeud (N, 130) et des points d'accès (PA, 120) utilise une modulation numérique à étalement de spectre LoRa®,
- la communication entre les ancres (A, 140), le noeud (N, 130) et des points d'accès (PA, 120) utilise une bande de fréquence « Industrielle, Scientifique et Médicale » de 2,4 GHz à 2,4835 GHz,
- la mesure de la distance entre le noeud (N, 130) et les ancres (A, 140) se fait grâce à une mesure radio de temps de vol d'une résolution inférieure à 10 nanosecondes, avec les ancres (A, 140) dans un rôle d'interrogateur/récepteur, le noeud (N, 130) agissant comme réflecteur actif radio.

8. Réseau selon la revendication 7, dans lequel les ancres (A, 140) situées à portée radio d'une ancre interrogatrice transmettant un signal de mesure de distance, et à portée radio d'un noeud cible (N, 130) se comportant comme réflecteur actif radio, sont adaptées pour effectuer une mesure complémentaire avec une résolution inférieure à 10 nanoseconde, vu de leur position, du temps entre le signal émis par l'ancre interrogatrice et la réponse dudit noeud cible, ce temps correspondant à la pseudo-distance entre ledit noeud cible, l'ancre interrogatrice et l'ancre effectuant la mesure complémentaire.

9. Réseau selon l'une des revendications précédentes, dans lequel la mesure radio de distance entre le noeud (N, 130) et une ancre (A, 140) se fait par une mesure radio de temps de vol de la réponse émise par ledit noeud au message d'interrogation de ladite ancre.

10. Réseau selon l'une des revendications 3 à 8, dans lequel la mesure radio de distance entre le noeud (N, 130) et une ancre (A, 140) se fait par une mesure de la puissance radio de la réponse émise par ledit noeud au message d'interrogation de ladite ancre.

11. Procédé pour localiser un noeud dans un réseau informatique sans fil, lequel réseau comporte un serveur (S, 110) et au moins un noeud (N, 130) adapté pour communiquer avec ledit serveur, les échanges de données entre ledit noeud et ledit serveur passant par au moins un point d'accès (PA, 120), lequel noeud et lequel point d'accès sont équipés d'émetteurs-récepteurs radio, ledit noeud étant adapté pour communiquer avec ledit point d'accès, ledit procédé comportant une étape consistant à installer dans le réseau au moins trois ancres (A, 140) adaptées pour communiquer avec le serveur (S, 110), les échanges de données entre lesdites ancres et ledit serveur passant par au moins un point d'accès (PA, 120), ledit procédé comportant une étape consistant à envoyer, depuis le serveur (S, 110), une commande (430) au noeud (N, 130),
**caractérisé en ce que** le procédé comprend en outre les étapes suivantes :
- envoyer successivement, depuis le serveur (S, 110), une commande (432) à au moins trois ancres sélectionnées dont les positions sont connues,
- suite à la commande (430) transmise par le serveur (S, 110) au noeud (N, 130), placer ledit noeud, pour un temps déterminé, dans un mode lui permettant d'émettre une réponse à un message d'interrogation émis par une ancre (A, 140), pour une mesure radio de distance,
- suite à la commande (432) transmise par le serveur (S, 110) à une ancre (A, 140), envoyer, depuis ladite ancre (A, 140), un message d'interrogation (420) au noeud (N, 130) et effectuer une mesure radio de distance entre ladite ancre et le noeud (N, 130) sur la base de ladite réponse, et transmettre cette mesure audit serveur.

12. Réseau informatique sans fil comportant un serveur (S, 110) et au moins un noeud (N, 130) adapté pour communiquer avec ledit serveur, les échanges de données entre ledit noeud et ledit serveur passant par au moins un point d'accès (PA, 120) relié audit serveur par des liens informatiques, lequel noeud et lequel point d'accès sont équipés d'émetteurs-récepteurs radio, ledit noeud étant adapté pour communiquer avec ledit point d'accès, le réseau comprend en outre au moins trois ancres (A, 140) adaptées pour communiquer avec le serveur (S, 110), les échanges de données entre lesdites ancres et ledit serveur passant par au moins un point d'accès (PA, 120), le serveur (S, 110) est adapté pour envoyer une commande à une ancre (A, 140), ladite ancre étant adaptée pour suite à ladite commande, se placer, pour un temps déterminé, dans un mode « localisation »,
**caractérisé en ce que :**
- le serveur (S, 110) est adapté pour envoyer une commande à chaque ancre (A, 140) dont les positions sont connues et envoyer une commande au noeud (N, 130),
- chaque ancre (A, 140) est adaptée pour, suite à la commande transmise par le serveur (S, 110), se placer, pour un temps déterminé, dans un mode « localisation » lui permettant d'émettre une réponse à un message d'interrogation émis par le noeud (N, 130) pour une mesure radio de distance,
- le noeud (N, 130) est adapté pour, suite à la commande transmise par le serveur (S, 110) audit noeud, envoyer un message d'interrogation à chaque ancre (A, 140) et effectuer, sur la base de ladite réponse émise par une ancre (A, 140) placée en mode « localisation », la mesure radio de distance entre ledit noeud et ladite ancre (A, 140), et transmettre cette mesure audit serveur.

13. Procédé pour localiser un noeud dans un réseau informatique sans fil, lequel réseau comporte un serveur (S, 110) et au moins un noeud (N, 130) adapté pour communiquer avec ledit serveur, les échanges de données entre ledit noeud et ledit serveur passant par au moins un point d'accès (PA, 120), lequel noeud et lequel point d'accès sont équipés d'émetteurs-récepteurs radio, ledit noeud étant adapté pour communiquer avec ledit point d'accès, le réseau comprend en outre au moins trois ancres (A, 140) adaptées pour communiquer avec le serveur (S, 110), les échanges de données entre lesdites ancres et ledit serveur passant par au moins un point d'accès (PA, 120), ledit procédé comportant une étape consistant à envoyer, depuis le serveur (S, 110), une commande (430) a une ancre (A, 140), et une étape consistant à, suite à ladite commande, placer ladite ancre, pour un temps déterminé, dans un mode « localisation »,
**caractérisé en ce que** le procédé comprend les étapes suivantes :
- envoyer, depuis le serveur (S, 110), une commande à chaque ancre (A, 140) dont les positions sont connues, et envoyer, depuis ledit serveur (S, 110), une commande au noeud (N, 130),
- suite à la commande transmise par le serveur (S, 110) à chaque ancre (A, 140), placer chacune desdites ancres, pour un temps déterminé, dans un mode « localisation » lui permettant d'émettre une réponse à un message d'interrogation émis par le noeud (N, 130) pour une mesure radio de distance,
- suite à la commande transmise par le serveur (S, 110) au noeud (N, 130), envoyer, depuis ledit noeud (N, 130), un message d'interrogation à chaque ancre (A, 140) et effectuer, sur la base de ladite réponse émise par une ancre (A, 140) placée en mode « localisation », la mesure radio de distance entre ledit noeud et ladite ancre (A, 140), et transmettre cette mesure audit serveur.

## Patentansprüche

1. Drahtloses Informationsnetz, umfassend einen Server (S, 110) und mindestens einen Knoten (N, 130), der geeignet ist, mit dem Server zu kommunizieren, wobei die Datenaustausche zwischen dem Knoten und dem Server durch mindestens einen Zugangspunkt (PA, 120) hindurchgehen, wobei der Knoten und der Zugangspunkt mit Funksendern/Empfängern ausgestattet sind, wobei der Knoten geeignet ist, mit dem Zugangspunkt zu kommunizieren, wobei das Netz außerdem mindestens drei Anker (A, 140) umfasst, die geeignet sind, mit dem Server (S, 110) zu kommunizieren, wobei die Datenaustausche zwischen den Ankern und dem Server durch mindestens einen Zugangspunkt (PA, 120) hindurchgehen, wobei der Server (S, 110) geeignet ist, einen Befehl (430) an den Knoten (N, 130) zu senden,
**dadurch gekennzeichnet, dass**:
- der Server (S, 110) geeignet ist, einen Befehl (432) aufeinanderfolgend an mindestens drei ausgewählte Anker zu senden, deren Positionen bekannt sind,
- der Knoten (N, 130) geeignet ist, nach dem Befehl (430), der von dem Server (S, 110) übertragen wird, sich, für eine bestimmte Zeit, in einen Modus zu versetzen, der es ihm ermöglicht, eine Antwort auf eine Abfragenachricht zu senden, die von einem Anker (A, 140) für eine Funkdistanzmessung gesendet wird,
- jeder Anker (A, 140) geeignet ist, nach dem Befehl (432), der von dem Server (S, 110) übertragen wird, eine Abfragenachricht (420) an den Knoten (N, 130) zu senden und die Funkdistanzmessung zwischen dem Anker und dem Knoten (N, 130) auf der Basis der Antwort durchzuführen, und diese Messung an den Server zu übertragen.

2. Netz nach Anspruch 1, wobei, beim Empfang des Befehls, der von dem Server (S, 110) übertragen wird, jeder Anker (A, 140) geeignet ist, eine Abfragenachricht (420) an den Knoten (N, 130) zu senden, dann die Zeit zu stoppen, welche die Antwort (421) des Knotens benötigt, um anzukommen, wobei der Anker lokal die Distanz (di) zwischen sich selbst und dem Knoten berechnet, und dann diese Informationen zu dem Server (S, 110) überträgt.

3. Netz nach einem der vorhergehenden Ansprüche, wobei, beim Empfang des Befehls, der von dem Server (S, 110) übertragen wird, der Knoten (N, 130) geeignet ist, einen Validierungsrahmen (411) an den Server zu senden.

4. Netz nach Anspruch 3, wobei der Validierungsrahmen (411) eine Messung des Atmosphärendrucks auf der Ebene des Knotens (N, 130) enthält.

5. Netz nach einem der Ansprüche 3 oder 4, wobei der Server (S, 110) geeignet ist, eine approximative Lokalisierung des Knotens (N, 130) aus einer Liste von Zugangspunkten (PA, 120), die den Validierungsrahmen (411) empfangen haben, und der Kenntnis der Position jedes Zugangspunkts zu bestimmen, wobei der Server geeignet ist, die Anker (A, 140) auszuwählen, die dem Knoten am nächsten liegen.

6. Netz nach einem der vorhergehenden Ansprüche, umfassend mehrere Knoten (N, 130) und mindestens zwei Zugangspunkte (PA, 120), wobei das Netz außerdem mindestens eine der folgenden Charakteristiken umfasst:
- die Zugangspunkte (PA, 120) sind mit dem Server (S, 110) durch Informationsverbindungen TCP/IP verbunden sind, deren Latenzen kleiner als 300 Millisekunden sind,
- die Knoten (N, 130), die Anker (A, 140) und die Zugangspunkte (PA, 120) sind mit Funksendern-Empfängern ausgestattet, die mit derselben Modulation und in demselben Frequenzband betrieben werden,
- die Funkabdeckungszonen der Zugangspunkte (PA, 120) decken sich mindestens teilweise,
- die Zugangspunkte (PA, 120) agieren auf der Ebene der Schicht 1 des Netzes und sind für die Schicht 2 des Netzes transparent, so dass die Kommunikation zwischen den Knoten (N, 130) und dem Server (S, 110) sowie die Kommunikation zwischen den Ankern (A, 140) und dem Server (S, 110) transparent erfolgen, ohne die Notwendigkeit, einen oder mehrere Zugangspunkte (PA, 120) zu adressieren oder sich explizit damit zu assoziieren,
- die Daten werden in zwei Richtungen zwischen den Knoten (N, 130) und dem Server (S, 110) ausgetauscht,
- die Knoten (N, 130) kommunizieren mit den Zugangspunkten (PA, 120) aufgrund eines Protokolls der Ebene 2, asynchron, wo alle Austausche von einem Knoten initiiert werden, und wo der Server (S, 110) über eine Verzögerung verfügt, die größer ist als das Doppelte der typischen Latenz zwischen Server und Zugriffspunkten, um eine Antwort an einen Knoten (N, 130) über einen Zugangspunkt (PA, 120) zu senden,
- der Server (S, 110) ist geeignet, die Rahmen zu identifizieren, die gleichzeitig von mehreren Zugangspunkten (PA, 120) empfangen werden, und, unter jenen, die einen Rahmen empfangen haben, der von einem Knoten (N, 130) gesendet wird, einen einzigen Zugangspunkt auszuwählen, durch den ein Antwortrahmen zu senden ist,
- der Server (S, 110) ist geeignet, einen Rahmen, der Befehle an jeden Anker (A, 140) enthält, zu einem beliebigen Zeitpunkt über einen a priori bekannten Zugangspunkt (PA, 120) zu senden,
- der Server (S, 110) ist geeignet, mehrere Distanzmessungen mit einem Zielknoten (N, 130) zu verwenden, die von mehr als drei Ankern (A, 140) durchgeführt wurden, deren Positionen bekannt sind, um die Position des Zielknotens zu berechnen.

7. Netz nach einem der vorhergehenden Ansprüche, umfassend mindestens eine der folgenden Charakteristiken:
- die Kommunikationen zwischen den Ankern (A, 140), dem Knoten (N, 130) und den Zugangspunkten (PA, 120) verwendet eine digitale Modulation mit gespreiztem Spektrum LoRa®,
- die Kommunikationen zwischen den Ankern (A, 140), dem Knoten (N, 130) und den Zugangspunkten (PA, 120) verwendet ein "industrielles, wissenschaftliches und medizinisches" Frequenzband von 2,4 GHz bis 2,4835 GHz,
- die Messung der Distanz zwischen dem Knoten (N, 130) und den Ankern (A, 140) erfolgt aufgrund einer Funkmessung der Flugzeit mit einer Auflösung von weniger als 10 Nanosekunden, wobei die Anker (A, 140) die Rolle eines Abfragers/Empfängers spielen, wobei der Knoten (N, 130) als aktiver Funkreflektor agiert.

8. Netz nach Anspruch 7, wobei die Anker (A, 140), die in Funkreichweite eines Abfragerankers, der ein Distanzmesssignal überträgt, und in Funkreichweite eines Zielknotens (N, 130), der sich als aktiver Funkreflektor verhält, angeordnet sind, geeignet sind, eine komplementäre Messung mit einer Auflösung von weniger als 10 Nanosekunden, angesichts ihrer Position, der Zeit zwischen dem Signal, das von dem Abfrageranker gesendet wird, und der Antwort des Zielknotens durchzuführen, wobei diese Zeit der Pseudo-Distanz zwischen dem Zielknoten, dem Abfrageranker und dem Anker, der die komplementäre Messung durchführt, entspricht.

9. Netz nach einem der vorhergehenden Ansprüche, wobei die Funkdistanzmessung zwischen dem Knoten (N, 130) und einem Anker (A, 140) durch eine Funkmessung der Flugzeit der Antwort, die von dem Knoten gesendet wird, auf die Abfragenachricht des Ankers erfolgt.

10. Netz nach einem der Ansprüche 3 bis 8, wobei die Funkdistanzmessung zwischen dem Knoten (N, 130) und einem Anker (A, 140) durch eine Messung der Funkleistung der Antwort, die von dem Knoten gesendet wird, auf die Abfragenachricht des Ankers erfolgt.

11. Verfahren zur Lokalisierung eines Knotens in einem drahtlosen Informationsnetz, wobei das Netz einen Server (S, 110) und mindestens einen Knoten (N, 130) umfasst, der geeignet ist, mit dem Server zu kommunizieren, wobei die Datenaustausche zwischen dem Knoten und dem Server durch mindestens einen Zugangspunkt (PA, 120) hindurchgehen, wobei der Knoten und der Zugangspunkt mit Funksendern/Empfängern ausgestattet sind, wobei der Knoten geeignet ist, mit dem Zugangspunkt zu kommunizieren, wobei das Verfahren einen Schritt umfasst, der daraus besteht, in dem Netz mindestens drei Anker (A, 140) zu installieren, die geeignet sind, mit dem Server (S, 110) zu kommunizieren, wobei die Datenaustausche zwischen den Ankern und dem Server durch mindestens einen Zugangspunkt (PA, 120) hindurchgehen, wobei das Verfahren einen Schritt umfasst, der daraus besteht, von dem Server (S, 110), einen Befehl (430) an den Knoten (N, 130) zu senden,
**dadurch gekennzeichnet, dass** das Verfahren außerdem die folgenden Schritte umfasst:
- aufeinanderfolgendes Senden, von dem Server (S, 110), eines Befehls (432) an mindestens drei ausgewählte Anker, deren Positionen bekannt sind,
- nach dem Befehl (430), der von dem Server (S, 110) an den Knoten (N, 130) übertragen wird, Versetzen des Knotens, für eine bestimmte Zeit, in einen Modus, der es ihm ermöglicht, eine Antwort auf eine Abfragenachricht zu senden, die von einem Anker (A, 140) für eine Funkdistanzmessung gesendet wird,
- nach dem Befehl (432), der von dem Server (S, 110) an einen Anker (A, 140) übertragen wird, Senden, von dem Anker (A, 140), einer Abfragenachricht (420) an den Knoten (N, 130) und Durchführen einer Funkdistanzmessung zwischen dem Anker und dem Knoten (N, 130) auf der Basis der Antwort, und Übertragen dieser Messung an den Server.

12. Drahtloses Informationsnetz, umfassend einen Server (S, 110) und mindestens einen Knoten (N, 130), der geeignet ist, mit dem Server zu kommunizieren, wobei die Datenaustausche zwischen dem Knoten und dem Server durch mindestens einen Zugangspunkt (PA, 120) hindurchgehen, der durch Informationsverbindungen mit dem Server verbunden ist, wobei der Knoten und der Zugangspunkt mit Funksendern/Empfängern ausgestattet sind, wobei der Knoten geeignet ist, mit dem Zugangspunkt zu kommunizieren, wobei das Netz außerdem mindestens drei Anker (A, 140) umfasst, die geeignet sind, mit dem Server (S, 110) zu kommunizieren, wobei die Datenaustausche zwischen den Ankern und dem Server durch mindestens einen Zugangspunkt (PA, 120) hindurchgehen, wobei der Server (S, 110) geeignet ist, einen Befehl an einen Anker (A, 140) zu senden, wobei der Anker geeignet ist, nach dem Befehl sich, für eine bestimmte Zeit, in einen "Lokalisierungs"modus zu versetzen,
**dadurch gekennzeichnet, dass**:
- der Server (S, 110) geeignet ist, einen Befehl an jeden der Anker (A, 140) zu senden, deren Positionen bekannt sind, und einen Befehl an den Knoten (N, 130) zu senden,
- jeder Anker (A, 140) geeignet ist, nach dem Befehl, der von dem Server (S, 110) übertragen wird, sich, für eine bestimmte Zeit, in einen "Lokalisierungs"modus zu versetzen, der es ihm ermöglicht, eine Antwort auf eine Abfragenachricht zu senden, die von dem Knoten (N, 130) für eine Funkdistanzmessung gesendet wird,
- der Knoten (N, 130) geeignet ist, nach dem Befehl, der von dem Server (S, 110) an den Knoten übertragen wird, eine Abfragenachricht an jeden Anker (A, 140) zu senden und, auf der Basis der Antwort, die von einem Anker (A, 140) gesendet wird, der in den "Lokalisierungs"modus versetzt wird, die Funkdistanzmessung zwischen dem Knoten und dem Anker (A, 140) durchzuführen, und diese Messung an den Server zu übertragen.

13. Verfahren zur Lokalisierung eines Knotens in einem drahtlosen Informationsnetz, wobei das Netz einen Server (S, 110) und mindestens einen Knoten (N, 130) umfasst, der geeignet ist, mit dem Server zu kommunizieren, wobei die Datenaustausche zwischen dem Knoten und dem Server durch mindestens einen Zugangspunkt (PA, 120) hindurchgehen, wobei der Knoten und der Zugangspunkt mit Funksendern/Empfängern ausgestattet sind, wobei der Knoten geeignet ist, mit dem Zugangspunkt zu kommunizieren, wobei das Netz außerdem mindestens drei Anker (A, 140) umfasst, die geeignet sind, mit dem Server (S, 110) zu kommunizieren, wobei die Datenaustausche zwischen den Ankern und dem Server durch mindestens einen Zugangspunkt (PA, 120) hindurchgehen, wobei das Verfahren einen Schritt umfasst, der daraus besteht, von dem Server (S, 110), einen Befehl (430) an einen Anker (A, 140) zu senden, und einen Schritt, der daraus besteht, nach dem Befehl, den Anker, für eine bestimmte Zeit, in einen "Lokalisierungs"modus zu versetzen,
**dadurch gekennzeichnet, dass** das Verfahren die folgenden Schritte umfasst:
- Senden, von dem Server (S, 110), eines Befehls an jeden der Anker (A, 140), deren Positionen bekannt sind, und Senden, von dem Server (S, 110), eines Befehls an den Knoten (N, 130),
- nach dem Befehl, der von dem Server (S, 110) an jeden Anker (A, 140) übertragen wird, Versetzen jeden der Anker, für eine bestimmte Zeit, in einen "Lokalisierungs"modus, der es ihm ermöglicht, eine Antwort auf eine Abfragenachricht zu senden, die von dem Knoten (N, 130) für eine Funkdistanzmessung gesendet wird,
- nach dem Befehl, der von dem Server (S, 110) an den Knoten (N, 130) übertragen wird, Senden, von dem Knoten (N, 130), einer Abfragenachricht an jeden Anker (A, 140), und Durchführen, auf der Basis der Antwort, die von einem Anker (A, 140) gesendet wird, der in den "Lokalisierungs"modus versetzt wird, der Funkdistanzmessung zwischen dem Knoten und dem Anker (A, 140), und Übertragen dieser Messung an den Server.

## Claims

1. Wireless computerized network comprising a server (S, 110) and at least one node (N, 130) adapted to communicate with the said server, the exchanges of data between the said node and the said server passing through at least one access point (PA, 120), which node and which access point are equipped with radio transmitters-receivers, the said node being adapted to communicate with the said access point, the network further comprises at least three anchors (A, 140) adapted to communicate with the server (S, 110), the exchanges of data between the said anchors and the said server passing through at least one access point (PA, 120), the server is adapted to send a command (430) to the node (N, 130),
**characterized in that:**
- the server (S, 110) is adapted to send successively to at least three selected anchors whose positions are known, a command (432),
- the node (N, 130) is adapted to, subsequent to the command (430) transmitted by the server (S, 110), place itself, for a determined time, in a mode allowing it to transmit a response to an interrogation message transmitted by an anchor (A, 140) for a radio measurement of distance,
- each anchor (A, 140) is adapted to, subsequent to the command (432) transmitted by the server (S, 110), send an interrogation message (420) to the node (N, 130) and perform the radio measurement of distance between the said anchor and the said node (N, 130) on the basis of the said response, and transmit this measurement to the said server.

2. Network according to Claim 1, in which, on receipt of the command transmitted by the server (S, 110), each anchor (A, 140) is adapted to send an interrogation message (420) to the node (N, 130) and then meter the time that the response (421) of the said node takes to arrive, the said anchor calculating locally the distance (di) between itself and the said node, and then transmits this information to the server (S, 110).

3. Network according to one of the preceding claims, in which, on receipt of the command transmitted by the server (S, 110), the node (N, 130) is adapted to send a validation frame (411) to the said server.

4. Network according to Claim 3, in which the validation frame (411) contains a measurement of the atmospheric pressure at the level of the node (N, 130).

5. Network according to one of Claims 3 or 4, in which the server (S, 110) is adapted to determine an approximate location of the node (N, 130) on the basis of a list of access points (PA, 120) having received the validation frame (411) and of the knowledge of the position of each access point, the said server being adapted to select the anchors (A, 140) which are closest to the said node.

6. Network according to one of the preceding claims, comprising several nodes (N, 130) and at least two access points (PA, 120), which network further comprising at least one of the following characteristics:
- the access points (PA, 120) are connected to the server (S, 110) by TCP/IP computerized links whose latencies are less than 300 milliseconds,
- the nodes (N, 130), the anchors (A, 140) and the access points (PA, 120) are equipped with radio transmitters-receivers operating with the same modulation and in the same frequency band,
- the radio coverage zones of the access points (PA, 120) overlap at least partially,
- the access points (PA, 120) act at the level of layer 1 of the network and are transparent to layer 2 of the said network, in such a way that the communication between the nodes (N, 130) and the server (S, 110) as well as the communication between the anchors (A, 140) and the server (S, 110), are effected in a transparent manner, without requiring it to address, or to associate explicitly with one or more access points (PA, 120),
- data are exchanged in both directions between the nodes (N, 130) and the server (S, 110),
- the nodes (N, 130) communicate with the access points (PA, 120) by virtue of an asynchronous level-2 protocol, where all the exchanges are initiated by a node and where the server (S, 110) has at its disposal a lag greater than twice the typical latency between server and access points to transmit a response to a node (N, 130) by way of an access point (PA, 120),
- the server (S, 110) is adapted to identify frames received simultaneously by several access points (PA, 120), and to select, from among those having received a frame transmitted by a node (N, 130), a single access point through which to send a response frame,
- the server (S, 110) is adapted to send a frame containing commands to each anchor (A, 140) at any moment, by way of an access point (PA, 120) known a priori,
- the server (S, 110) is adapted to use multiple measurements of distance with a target node (N, 130), performed by more than three of anchors (A, 140) whose positions are known, to calculate the position of the said target node.

7. Network according to one of the preceding claims, comprising at least one of the following characteristics:
- the communication between the anchors (A, 140), the node (N, 130) and access points (PA, 120) uses a spread spectrum digital modulation LoRa®,
- the communication between the anchors (A, 140), the node (N, 130) and access points (PA, 120) uses an "Industrial, Scientific and Medical" frequency band of 2.4 GHz to 2.4835 GHz,
- the measurement of the distance between the node (N, 130) and the anchors (A, 140) is made by virtue of a radio measurement of flight time of a resolution of less than 10 nanoseconds, with the anchors (A, 140) in a role of interrogator/receiver, the node (N, 130) acting as active radio reflector.

8. Network according to Claim 7, in which the anchors (A, 140) situated within radio range of an interrogating anchor transmitting a distance measurement signal, and within radio range of a target node (N, 130) behaving as active radio reflector, are adapted to perform a complementary measurement with a resolution of less than 10 nanosecond, seen from their position, of the time between the signal transmitted by the interrogating anchor and the response of the said target node, this time corresponding to the pseudo-distance between the said target node, the interrogating anchor and the anchor performing the complementary measurement.

9. Network according to one of the preceding claims, in which the radio measurement of distance between the node (N, 130) and an anchor (A, 140) is made by a radio measurement of flight time of the response transmitted by the said node to the interrogation message of the said anchor.

10. Network according to one of claims 3 to 8, in which the radio measurement of distance between the node (N, 130) and an anchor (A, 140) is made by a measurement of the radio power of the response transmitted by the said node to the interrogation message of the said anchor.

11. Method for locating a node in a wireless computerized network, which network comprises a server (S, 110) and at least one node (N, 130) adapted to communicate with the said server, the exchanges of data between the said node and the said server passing through at least one access point (PA, 120), which node and which access point are equipped with radio transmitters-receivers, the said node being adapted to communicate with the said access point, the said method comprising a step consisting in installing in the network at least three anchors (A, 140) adapted to communicate with the server (S, 110), the exchanges of data between the said anchors and the said server passing through at least one access point (PA, 120), the said method comprising a step consisting in sending, from the server (S, 110), a command (430) to the node (N, 130),
**characterized in that** the method further comprises the following steps:
- send successively, from the server (S, 110), a command (432) to at least three selected anchors whose positions are known,
- subsequent to the command (430) transmitted by the server (S, 110) to the node (N, 130), place the said node, for a determined time, in a mode allowing it to transmit a response to an interrogation message transmitted by an anchor (A, 140), for a radio measurement of distance,
- subsequent to the command (432) transmitted by the server (S, 110) to an anchor (A, 140), send, from the said anchor (A, 140), an interrogation message (420) to the node (N, 130) and perform a radio measurement of distance between the said anchor and the said node (N, 130) on the basis of the said response, and transmit this measurement to the said server.

12. Wireless computerized network comprising a server (S, 110) and at least one node (N, 130) adapted to communicate with the said server, the exchanges of data between the said node and the said server passing through at least one access point (PA, 120) connected to the said server by computerized links, which node and which access point are equipped with radio transmitters-receivers, the said node being adapted to communicate with the said access point, the network further comprises at least three anchors (A, 140) adapted to communicate with the server (S, 110), the exchanges of data between the said anchors and the said server passing through at least one access point (PA, 120), server (S, 110) is adapted to send a command to an anchor (A, 140), the said anchor being adapted to, subsequent to the said command, place itself, for a determined time, in a "location" mode,
**characterized in that:**
- the server (S, 110) is adapted to send a command to each anchor (A, 140) whose positions are known and send a command to the node (N, 130),
- each anchor (A, 140) is adapted to, subsequent to the command transmitted by the server (S, 110), place itself, for a determined time, in a "location" mode allowing it to transmit a response to an interrogation message transmitted by the node (N, 130) for a radio measurement of distance,
- the node (N, 130) is adapted to, subsequent to the command transmitted by the server (S, 110) to the said node, send an interrogation message to each anchor (A, 140) and perform, on the basis of the said response transmitted by an anchor (A, 140) placed in "location" mode, the radio measurement of distance between the said node and the said anchor (A, 140), and transmit this measurement to the said server.

13. Method for locating a node in a wireless computerized network, which network comprises a server (S, 110) and at least one node (N, 130) adapted to communicate with the said server, the exchanges of data between the said node and the said server passing through at least one access point (PA, 120), which node and which access point are equipped with radio transmitters-receivers, the said node being adapted to communicate with the said access point, the network further comprises at least three anchors (A, 140) adapted to communicate with the server (S, 110), the exchanges of data between the said anchors and the said server passing through at least one access point (PA, 120), the said method comprising a step consisting in sending, from the server (S, 110), a command (430) to an anchor (A, 140), and a step consisting in, subsequent to the said command, placing the said anchor, for a determined time, in a "location" mode **characterized in that** the method comprises the following steps:
- send, from the server (S, 110), a command to each anchor (A, 140) whose positions are known, and send, from the said server (S, 110), a command to the node (N, 130),
- subsequent to the command transmitted by the server (S, 110) to each anchor (A, 140), place each of the said anchors, for a determined time, in a "location" mode allowing it to transmit a response to an interrogation message transmitted by the node (N, 130) for a radio measurement of distance,
- subsequent to the command transmitted by the server (S, 110) to the node (N, 130), send, from the said node (N, 130), an interrogation message to each anchor (A, 140) and perform, on the basis of the said response transmitted by an anchor (A, 140) placed in "location" mode, the radio measurement of distance between the said node and the said anchor (A, 140), and transmit this measurement to the said server.
